# FASCICULE DE BREVET EUROPEEN

(11) **EP 4 127 638 B1**
(45) Date de publication et mention de la délivrance du brevet: **23.04.2025**
(21) Numéro de dépôt: 21712855.2
(22) Date de dépôt: 22.03.2021
(51) Int. Cl.: G01L 17/00, B60C 23/02, B60C 23/04, H01Q 1/22, G01L 19/02, G01L 19/14, B29D 30/00

(54) **DISPOSITIF DE MESURE DE PRESSION D'UN PNEUMATIQUE**
REIFENDRUCKMESSVORRICHTUNG
DEVICE FOR MEASURING TYRE PRESSURE

(30) Priorité: 22.03.2020 FR 2002783
(43) Date de publication de la demande: 08.02.2023
(73) Titulaire: SAFRAN, 75015 Paris (FR); Safran Electronics & Defense, 75015 Paris (FR); Safran Landing Systems, 78140 Vélizy-Villacoublay (FR); COMPAGNIE GENERALE DES ETABLISSEMENTS MICHELIN, 63000 Clermont-Ferrand (FR)
(72) Inventeur: CANU, Antoine, 77550 MOISSY-CRAMAYEL (FR); BAILLY, Eric, 77550 MOISSY-CRAMAYEL (FR); VERA, David, 77550 MOISSY-CRAMAYEL (FR); NEBA, Eric-Carin, 63000 CLERMONT-FERRAND (FR); ARNOUX, Michaël, 63000 CLERMONT-FERRAND (FR)
(74) Mandataire: Cabinet Boettcher
(86) Numéro de dépôt international: PCT/EP2021/057283
(87) Numéro de publication internationale: WO 2021/191154

(56) Documents cités:
- WO-A1-2020/043744
- US-A1- 2002 046 791
- US-A1- 2013 106 597

## Description

La présente invention concerne un dispositif de mesure de pression d'un pneumatique destiné à équiper un aéronef.

### ARRIERE PLAN DE L'INVENTION

Classiquement, une roue d'aéronef comprend une jante et un pneumatique reçu sur la jante, la jante et le pneumatique délimitant un volume intérieur rempli d'un gaz sous pression. La réglementation impose de mesurer la pression du gaz enfermé dans le pneumatique au moins une fois par jour. En cas de sous gonflage du pneumatique, l'avion n'est pas autorisé à décoller.

La mesure de pression du gaz enfermé dans le pneumatique est en général effectuée manuellement à l'aide d'un manomètre raccordé sur une valve de gonflage solidaire de la jante et en communication avec le volume intérieur.

On connaît des pneumatiques équipés d'un dispositif de mesure de pression embarqué à l'intérieur du pneumatique et destiné à faciliter les opérations de maintenance au sol. Le dispositif de mesure de pression récolte des données numériques concernant la pression du gaz enfermé dans le pneumatique et transmet ces données par ondes radioélectriques à un lecteur agencé à distance, sans avoir besoin de toucher le pneumatique ou d'effectuer une quelconque opération manuelle.

Un tel dispositif de mesure de pression comprend généralement un boîtier s'étendant autour d'une carte électronique pourvue d'un capteur de pression et de composants électroniques répartis sur une même face de la carte électronique. Le boîtier comporte des canaux mettant en communication fluidique le capteur de pression avec l'extérieur. Une portion de la carte électronique s'étendant en saillie latérale du boitier comprend un fil d'antenne relié à un émetteur/récepteur radio.

Le dispositif de mesure de pression est inséré dans un patch caoutchoutique collé sur une surface interne du pneumatique. Le patch est préformé pour accueillir et maintenir le dispositif de mesure de pression en position, et permet d'absorber les chocs et les déformations subis par le pneumatique lorsque celui-ci roule, en particulier lors des phases de décollage et d'atterrissage.

Néanmoins, le roulage du pneumatique occasionne de nombreux mouvements relatifs entre le dispositif de mesure de pression et le patch qui finit par se détériorer et ne plus assurer son rôle de maintien du dispositif de mesure de pression sur la bande de roulement du pneumatique, entraînant alors la destruction de celui-ci. Des exemples de dispositifs de pression montés dans des pneumatiques sont décrits dans les documents US 2013/106597 A1 et WO 2020/043744 A1.

### OBJET DE L'INVENTION

L'invention a donc pour objet de proposer un dispositif de mesure de pression permettant d'obvier au moins en partie au problème précité.

### RESUME DE L'INVENTION

A cet effet, on prévoit, selon l'invention, un dispositif de mesure comprenant :
- un circuit électronique qui est réparti sur une première face et une deuxième face d'une carte électronique et qui comprend un capteur de pression monté sur la première face de la carte électronique ;
- au moins une antenne reliée au circuit électronique ;
- une première partie de boîtier recouvrant au moins partiellement la première face pour délimiter avec celle-ci un premier volume et comportant au moins un premier canal mettant en communication fluidique le premier volume avec l'extérieur ; et
- une deuxième partie de boîtier recouvrant au moins partiellement la deuxième face pour délimiter avec celle-ci un deuxième volume et possédant au moins un fond pour prendre appui contre une surface interne du pneumatique.

Selon l'invention, la deuxième partie de boîtier est agencée de telle manière que l'antenne s'étende en saillie latérale au moins par rapport à ladite deuxième partie de boîtier et que le dispositif ait un centre de gravité situé dans le deuxième volume à distance de la carte électronique.

En ayant un centre de gravité situé en dessous de la carte électronique, un tel dispositif de mesure de pression permet de limiter l'amplitude des mouvements relatifs entre ledit dispositif et le pneumatique lors du roulage du pneumatique, et donc d'éviter le détachement du dispositif de mesure de pression dudit pneumatique.

De manière particulière, la première partie de boîtier présente une hauteur inférieure à celle de la deuxième partie de boîtier.

De manière particulière, le premier volume est inférieur au deuxième volume.

De manière particulière, la surface projetée de la première partie de boîtier sur la première face de la carte électronique selon un axe orthogonal à ladite première face est inscrite dans la surface projetée de la deuxième partie de boîtier sur la même première face et selon la même direction.

De manière particulière, l'antenne comprend un fil s'étendant à l'intérieur de la carte électronique.

De manière particulière, l'antenne est de forme sensiblement triangulaire.

De manière particulière, la deuxième partie de boîtier comprend une surface latérale externe au moins en partie de forme convexe.

De manière particulière, la paroi latérale de la deuxième partie de boîtier comprend une rainure annulaire externe formant des moyens de fixation du dispositif au pneumatique.

De manière particulière, le boîtier est de forme globalement cylindrique.

L'invention concerne également un pneumatique comprenant un tel dispositif de mesure de pression.

Selon une caractéristique particulière, le fond de la deuxième partie de boîtier prend appui contre une surface interne d'une bande de roulement du pneumatique.

De manière particulière, le pneumatique comprend un élément de liaison collé à la surface interne de la bande de roulement du pneumatique, l'élément de liaison comportant un réceptacle dans lequel est insérée la deuxième partie de boîtier.

L'invention concerne aussi une roue comprenant un tel pneumatique.

L'invention concerne en outre un train d'atterrissage d'aéronef comprenant au moins une telle roue.

L'invention sera mieux comprise à la lumière de la description qui suit, laquelle est purement illustrative et non limitative.

### BREVE DESCRIPTION DES DESSINS

Il sera fait référence aux dessins annexés, parmi lesquels :
- la figure 1A est une vue en perspective d'un dispositif de mesure de pression selon un premier mode de réalisation de l'invention ;
- la figure 1B est une vue en coupe schématique du dispositif de mesure de pression illustré à la figure 1 ;
- la figure 1C est une vue de détail de la carte électronique du dispositif de mesure de pression illustré à la figure 1 ;
- la figure 2 est une vue schématique partielle en coupe d'une roue d'aéronef pourvu du dispositif de mesure de pression illustré aux figures 1A, 1B, 1C ;
- la figure 3 est une vue en perspective d'une première variante du dispositif de mesure de pression illustré aux figures 1A, 1B, 1C ;
- la figure 4 est une vue en perspective d'une deuxième variante du dispositif de mesure de pression illustré aux figures 1A, 1B, 1C ;
- la figure 5 est une vue en coupe schématique d'une troisième variante du dispositif de mesure de pression illustré aux figures 1A, 1B, 1C ;
- la figure 6 est une vue en coupe schématique d'une quatrième variante du dispositif de mesure de pression illustré aux figures 1A, 1B, 1C ;
- la figure 7 est une vue en coupe schématique d'une cinquième variante du dispositif de mesure de pression illustré aux figures 1A, 1B, 1C ;
- la figure 8 est une vue en coupe schématique d'un dispositif de mesure de pression selon un deuxième mode de réalisation de l'invention.

### DESCRIPTION DETAILLEE DE L'INVENTION

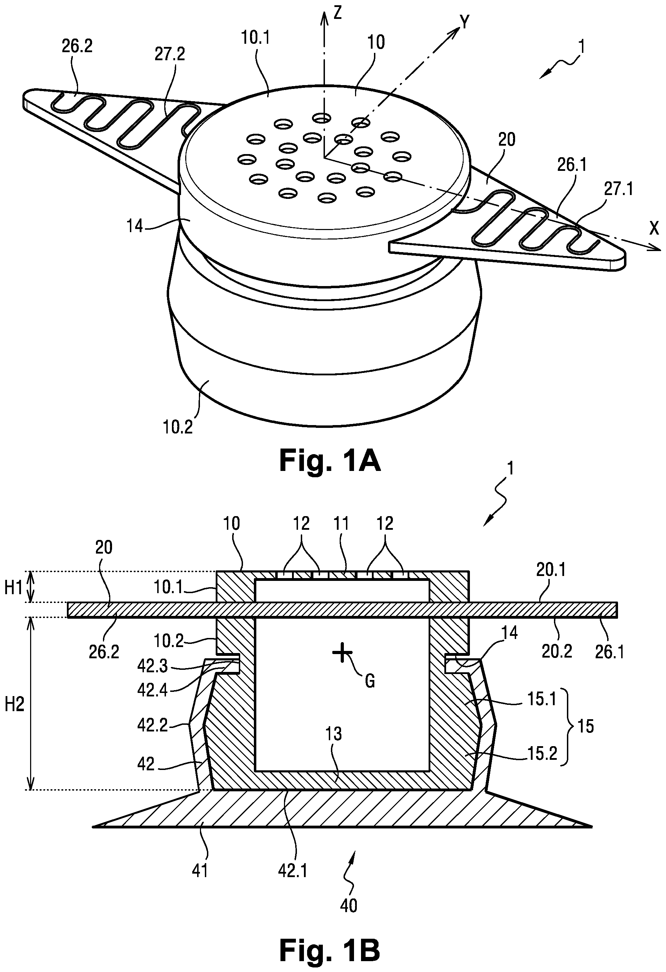

En référence aux figures 1A et 1B, un dispositif 1 de mesure de pression selon un premier mode de réalisation de l'invention comprend un boîtier 10 en résine phénolique, ici globalement en forme de cylindre droit, s'étendant selon un axe Z vertical. Le boîtier 10 comporte une première partie 10.1 et une deuxième partie 10.2 agencées de part et d'autre d'une carte électronique 20 s'étendant dans un plan XY horizontal.

La première partie 10.1 du boîtier 10 délimite avec une première face 20.1 de la carte électronique 20 un premier volume V1 dit « sale » et forme un couvercle comportant une surface supérieure 11 de forme plane. La première partie 10.1 de boîtier comprend des premiers canaux 12 mettant en communication fluidique le premier volume V1 avec l'extérieur.

La deuxième partie 10.2 du boîtier 10 délimite avec une deuxième face 20.2 de la carte électronique 20 un deuxième volume V2 dit « propre » et forme un capot comportant un fond 13 de forme plane. La deuxième partie 10.2 du boîtier 10 comprend une rainure 14 annulaire externe formant un moyen de préhension du dispositif 1 de mesure de pression et délimitant avec le fond 13 une surface latérale externe 15 sensiblement de forme convexe. La surface latérale externe 15 a un profil présentant dans un plan passant par l'axe Z une première zone plane 15.1 et une deuxième zone plane 15.2 légèrement inclinées l'une par rapport à l'autre mais aussi par rapport à l'axe Z.

La première partie 10.1 et la deuxième partie 10.2 du boîtier 10 présente respectivement, selon l'axe Z, une hauteur H1 et une hauteur H2. On notera que la hauteur H1 de la première partie 10.1 est inférieure à la hauteur H2 de la deuxième partie 10.2 et que le volume V1 est inférieur au volume V2.

La carte électronique 20 comporte des deuxièmes canaux 21 traversants mettant en communication fluidique le premier volume V1 avec le deuxième volume V2. Les deuxièmes canaux 21 ont une section circulaire dont le diamètre est compris entre 100 et 300 micromètres, préférentiellement 200 micromètres. Les premiers canaux 12 ont une section circulaire dont le diamètre est ici inférieur à celui des deuxièmes canaux 21 de manière à favoriser la circulation de l'air entre le premier volume V1 et le deuxième volume V2 et ainsi obtenir une meilleure dynamique en pression entre lesdits premier et deuxième volume V1, V2.

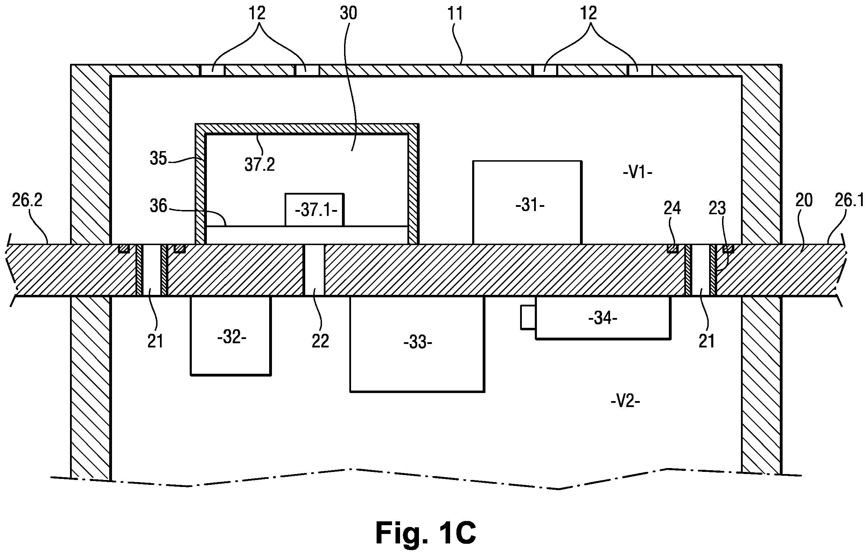

Comme illustré à la figure 1C, un circuit électronique est réparti sur la première face 20.1 et la deuxième face 20.2 de la carte électronique 20. Le circuit électronique comprend un capteur de pression 30, un émetteur/récepteur radio 31, un microcontrôleur 32, un récupérateur d'énergie 33 électromagnétique et une batterie 34. Le capteur de pression 30 et l'émetteur/récepteur radio 31 sont montés sur la première face 20.1 de la carte électronique 20 et s'étendent dans le premier volume V1. Le microcontrôleur 32, le récupérateur d'énergie 33 et la batterie 34 sont montés sur la deuxième face 20.2 de la carte électronique 20 et s'étendent dans le deuxième volume V2.

Le capteur de pression 30 comprend un capotage 35 de protection mécanique définissant une enceinte étanche à une pression de référence. Le capteur de pression 30 est ici un capteur piézoélectrique comprenant une membrane 36 qui s'étend parallèlement à la première face 20.1 de la carte électronique 20 et qui est munie d'une première électrode 37.1. Une partie supérieure du capotage 35 constitue une deuxième électrode 37.2 d'un condensateur. Un troisième canal 22 traversant la carte électronique 20 met en communication fluidique l'enceinte délimitée par le capotage 35 avec le deuxième volume V2. Le troisième canal 22 a une section circulaire dont le diamètre est ici sensiblement égal à celui des deuxièmes canaux 21.

Le récupérateur d'énergie 33 comprend un convertisseur qui convertit l'énergie cinétique captée en énergie électrique et l'envoie à la batterie 34 pour la stocker. Le récupérateur d'énergie 33 comporte ici une bille en matériau ferromagnétique pouvant se déplacer librement dans l'entrefer d'une bobine. La batterie 34 alimente le microcontrôleur 32 et l'émetteur/récepteur radio 31.

Comme visible à la figure 1C, les deuxièmes canaux 21 sont pourvus d'un revêtement métallique 23 obtenu par métallisation. Chaque revêtement métallique 23 est relié à un pôle de la batterie 34, ici un pôle positif. Un anneau 24 s'étend autour de chaque revêtement métallique 23 à une distance non nulle de celui-ci. Chaque anneau 24 est ici réalisé par un dépôt de cuivre dans une rainure 25 usinée dans la carte électronique 20 et est relié à un premier pôle de la batterie 34, ici un pôle négatif. Avantageusement, l'anneau 24 s'étend sensiblement en retrait de la première face 20.1 de la carte électronique 20 afin de créer une zone de rétention.

La carte électronique 20 comprend en outre une première portion 26.1 latérale et une deuxième portion 26.2 s'étendant en saillie latérale de part et d'autre du boîtier 10 selon un axe X horizontal perpendiculaire à l'axe Z. A l'intérieur de la première portion 26.1 et de la deuxième portion 26.2 s'étend un fil ou une piste d'antenne 27.1, 27.2 relié à l'émetteur/récepteur radio 31. La première portion 26.1 et la deuxième portion 26.2 sont de forme sensiblement identique et sont ici de forme triangulaire.

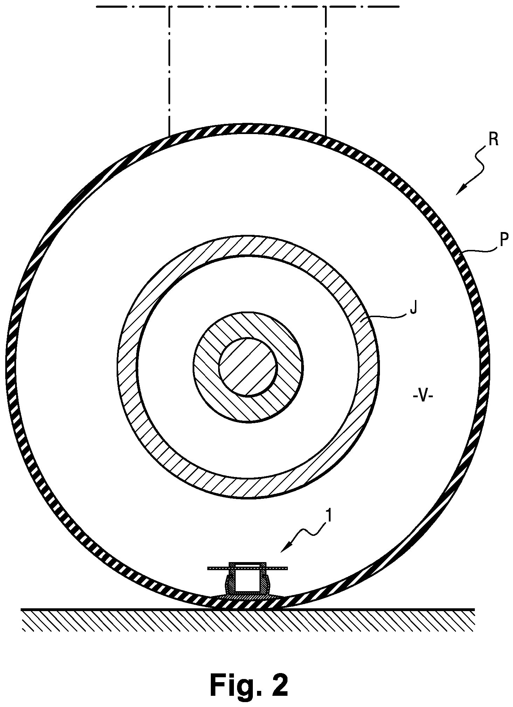

Comme illustré à la figure 2, le dispositif 1 de mesure de pression est placé à l'intérieur d'une roue R d'un train d'atterrissage d'aéronef.

La roue R comprend une jante J sur laquelle est monté un pneumatique P définissant avec la jante J un volume interne V rempli d'azote sous pression. Un élément de liaison 40 en matériau élastomère permet de fixer le dispositif 1 de mesure de pression sur une surface interne d'une bande de roulement du pneumatique P et d'absorber au moins partiellement les chocs et les déformations subis par ledit pneumatique P lorsque celui-ci roule.

L'élément de liaison 40 comprend une embase 41 sensiblement de forme tronconique dont la grande base est reliée de manière adhésive à la surface interne de la bande de roulement du pneumatique P et dont la petite base forme un fond 42.1 d'un réceptacle 42 de forme globalement cylindrique.

Le réceptacle 42 comprend une paroi latérale 42.2 ayant une surface interne agencée pour coopérer avec la surface latérale externe 15 de la deuxième partie 10.2 du boîtier 10, et une ouverture 42.3 d'insertion de la deuxième partie de boîtier 10.2 du dispositif 1 de mesure de pression dans le réceptacle 42. L'ouverture 42.3 est délimitée par un rebord 42.4 annulaire agencé pour être engagé dans la rainure 14 annulaire externe de façon à immobiliser et retenir ladite deuxième partie de boîtier 10.2 dans le réceptacle 42.

L'aéronef est équipé d'un émetteur/récepteur radio accordé sur des fréquences d'émission et de réception de l'émetteur/récepteur radio 31 du dispositif 1 de mesure de pression.

En fonctionnement, l'air sous pression contenu dans le volume interne V défini par la jante J et le pneumatique P pénètre par les premiers canaux 12 du boîtier 10 dans le premier volume V1. Les premiers canaux 12 réalisent un premier filtrage des particules (poussière, limaille, grain de sable...) pouvant être présentes dans le volume interne V. Un second filtrage de l'air est réalisé par les deuxièmes canaux 21 lors de son passage du premier volume V1 vers le deuxième volume V2. L'air présent dans le deuxième volume V2 pénètre ensuite dans l'enceinte définie par le capotage 35 du capteur de pression 30 et agit sur la membrane 36. Sous l'effet de la pression de l'air régnant dans l'enceinte, la membrane 36 se déforme et la capacité du condensateur associé à ladite membrane 36 est modifiée. Un convertisseur analogique-numérique intégré au microcontrôleur 32 convertit la capacité du condensateur en une valeur de pression qui est ensuite envoyée à l'émetteur/récepteur radio de l'aéronef à l'aide de l'émetteur/récepteur radio 31 du dispositif 1 de mesure de pression.

La batterie 34 établit une tension entre le revêtement métallique 23 des deuxièmes canaux 21 et les anneaux 24 de cuivre qui l'entourent, réalisant une vaporisation par électrolyse de l'eau qui pourrait venir obstruer les deuxièmes canaux 21. Le diamètre des deuxièmes canaux 21 favorise une rétention de l'eau par capillarité et contribue à empêcher le passage de l'humidité de l'air contenu dans la roue R vers le deuxième volume V2. La rétention de l'humidité dans les deuxièmes canaux 21 et le dispositif d'électrolyse de l'eau permettent de limiter la présence d'eau sur la membrane 36 et de protéger le dispositif 1 de mesure de pression des conséquences préjudiciables du gel lorsque l'aéronef est en vol. En effet, la présence d'eau gelée sur la membrane 36 rend généralement le capteur de pression 30 inopérant et provoque le plus souvent sa destruction.

Au cours des phases de rotation de la roue R, le récupérateur d'énergie 33 convertit l'énergie cinétique à laquelle est soumis le dispositif 1 en énergie électrique qui est stockée dans la batterie 34.

La carte électronique 20 est liée à la première partie 10.1 et la deuxième partie 10.2 du boîtier 10 par un cordon de colle ayant une souplesse autorisant un mouvement relatif entre ladite carte électronique 20 et le boîtier 10, ce qui permet de limiter la transmission des vibrations et des chocs auxquels est soumis la roue R à la carte électronique 20. La colle présente une dureté comprise 30 shore 00 et 60 shore A.

La répartition des composants électroniques 30, 31, 32, 33, 34 sur la première face 20.1 et la deuxième face 20.2 de la carte électronique 20, et la forme et les dimensions du boîtier 10 (notamment les hauteurs H1 et H2) permettent au dispositif 1 de mesure de pression de présenter un centre de gravité G situé dans le deuxième volume V2, à distance de la carte électronique 20. En outre, de par l'agencement symétrique de la première portion 26.1 et de la deuxième portion 26.2 de la carte électronique 20 hors du boîtier 10, le centre de gravité G se situe sensiblement sur l'axe Z central du boîtier 10.

En ayant un centre de gravité G situé en dessous de la carte électronique 20, le dispositif 1 de mesure de pression permet de limiter l'amplitude des mouvements relatifs entre le réceptacle 42 et ledit dispositif 1 de mesure de pression occasionnés lors du roulage de la roue R, et donc de limiter la détérioration de l'élément de liaison 40 du dispositif 1 collé sur la bande de roulement du pneumatique P. Le débattement angulaire du dispositif 1 est également limité, limitant le risque que l'antenne vienne percuter la surface interne du pneumatique.

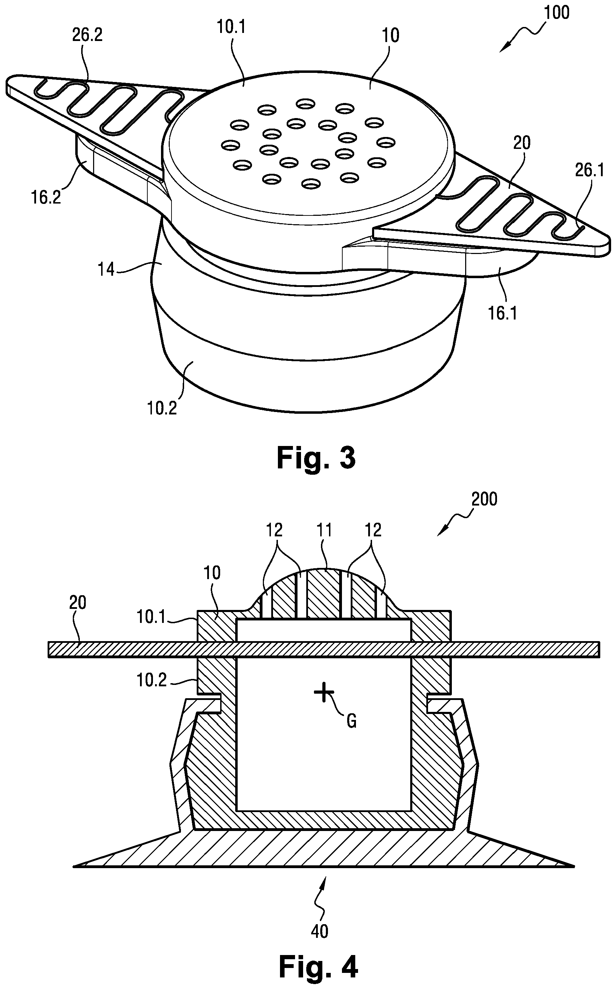

La figure 3 illustre un dispositif 100 qui est une première variante du dispositif 1 illustré aux figures 1A, 1B, 1C. Le dispositif 100 de mesure de pression diffère du dispositif 1 en ce que le boîtier 10 comprend des oreilles formées par une première excroissance 16.1 et une deuxième excroissance 16.2 qui s'étendent en saillie latérale d'une extrémité supérieure de la deuxième partie 10.2 du boîtier 10. La première excroissance 16.1 et la deuxième excroissance 16.2 sont de forme sensiblement identique et coopèrent avec la deuxième face 20.2 de la carte électronique 20 au niveau de la première portion 26.1 et la deuxième portion 26.2 de façon à limiter la flexion desdites première et deuxième portions 26.1, 26.2 provoquées par la rotation de la roue R sous l'effet de leur propre poids.

La figure 4 illustre un dispositif 200 qui est une deuxième variante du dispositif 1 illustré aux figures 1A, 1B, 1C. Le dispositif 200 de mesure de pression diffère du dispositif 1 en ce que la première partie 10.1 du boîtier forme un couvercle ayant une surface supérieure 11 de forme bombée vers l'extérieur tout en conservant une surface inférieure de forme plane. La longueur des premiers canaux 12 s'en trouvent ainsi augmentée. La surface supérieure 11 bombée de la première partie 10.1 du boîtier 10 et l'augmentation de la longueur des premiers canaux 12 permet de limiter l'accumulation de polluant à proximité immédiate des orifices d'entrée des premiers canaux 12.

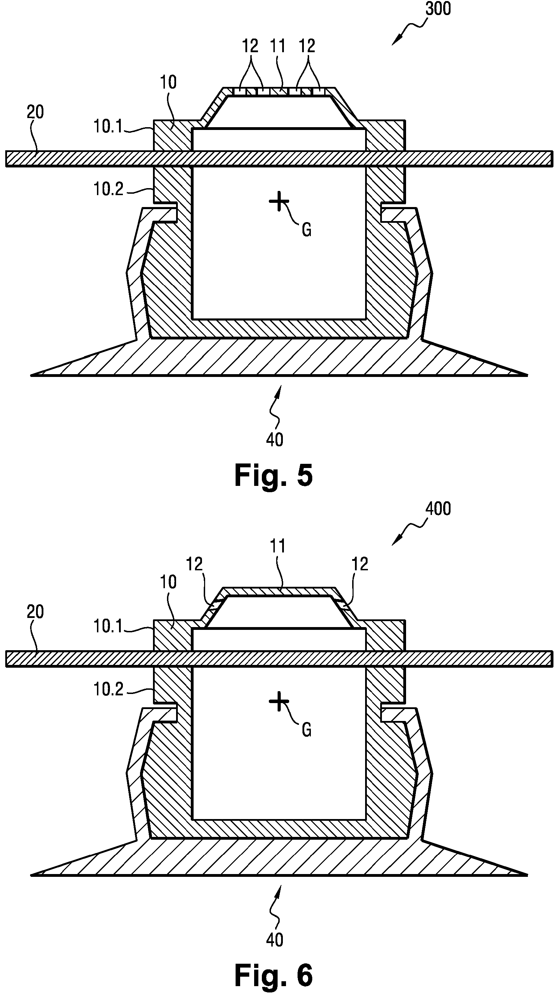

La figure 5 illustre un dispositif 300 qui est une troisième variante du dispositif 1 illustré aux figures 1A, 1B, 1C. Le dispositif 300 de mesure de pression diffère du dispositif 1 en ce que la première partie 10.1 du boîtier comporte une portion supérieure 11 de forme générale tronconique ayant une paroi supérieure plane traversée par les premiers canaux 12 et raccordée à une paroi tronconique. L'ajout d'une pente à la portion supérieure 11 permet, comme pour le dispositif 200, de limiter l'accumulation de polluant à proximité immédiate des orifices d'entrée des premiers canaux 12.

La figure 6 illustre un dispositif 400 de mesure de pression qui est une quatrième variante du dispositif 1 illustré aux figures 1A, 1B, 1C. Le dispositif 400 diffère du dispositif 300 en ce que les premiers canaux 12 traversent de manière oblique la paroi tronconique de la portion supérieure 11. Les premiers canaux 12 débouchent à l'intérieur du premier volume V1 par un orifice qui est plus éloigné de la carte électronique 20 que l'orifice d'entrée par lequel ils débouchent à l'extérieur du volume V1. Le positionnement des premiers canaux 12 permet de limiter l'accumulation de polluants à proximité immédiate des orifices d'entrée des premiers canaux 12.

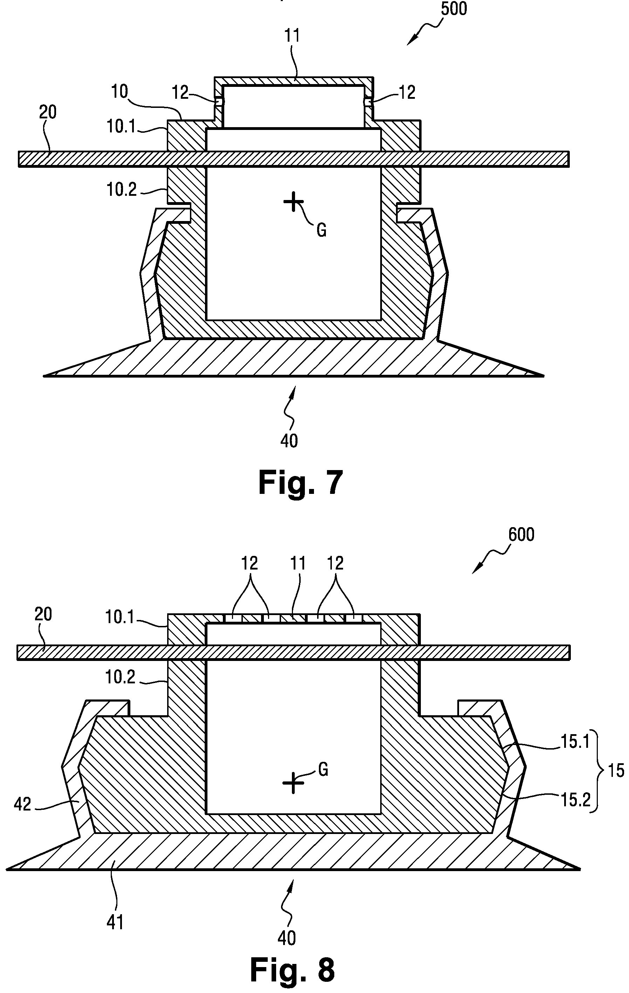

La figure 7 illustre un dispositif 500 de mesure de pression qui est une cinquième variante du dispositif 1 illustré aux figures 1A, 1B, 1C. Le dispositif 500 de diffère du dispositif 1 en ce que les premiers canaux 12 s'étendent parallèlement à la première face 20.1 de la carte électronique 20, ce qui permet, comme pour les dispositifs 200 à 400, de limiter l'accumulation de polluant à proximité immédiate des orifices d'entrée des premiers canaux 12.

La figure 8 illustre un dispositif 600 de mesure de pression selon un deuxième mode de réalisation de l'invention. Le dispositif 600 diffère du dispositif 1 en ce que la surface latérale externe 15 de la deuxième partie 10.2 du boîtier 10 a un diamètre agrandi au voisinage du fond 13, de sorte que la surface projetée de la première partie 10.1 du boîtier 10 sur la première face 20.1 de la carte électronique 20 selon l'axe Z est inscrite dans la surface projetée de la deuxième partie 10.2 du boîtier 10 sur la même face 20.1 et selon le même axe Z, le volume V2 restant inchangé. Il en résulte que le centre de gravité G se trouve désormais plus proche du fond 13 du boîtier 10 que de la deuxième face 20.2 de la carte électronique 20. En outre, la deuxième partie de boîtier 10.2 comporte ainsi un renflement extérieur au voisinage du fond 13, renflement qui est épousé par la paroi du réceptacle 42 pour assurer la fixation de la deuxième partie de boîtier 10.2 à la surface interne du pneumatique.

Bien entendu, l'invention n'est pas limitée au mode de réalisation décrit mais englobe toute variante entrant dans le champ de l'invention telle que définie par les revendications.

Bien qu'ici le dispositif de mesure de pression comprenne un boîtier en résine phénolique, l'invention s'applique également à d'autres types de boîtiers comme par exemple un boîtier métallique, en fibre de carbone, en matière époxy ou autre.

Bien qu'ici le boîtier soit de forme cylindrique, l'invention s'applique à d'autres formes de boîtier comme par exemple un boîtier ovoïde, parallélépipèdique ou de forme quelconque.

Bien qu'ici l'antenne soit une partie de la carte électronique, l'antenne peut être constituée d'un ou plusieurs fils métalliques droits ou enroulés en ressort ou spirale, ou avoir une autre forme.

Bien qu'ici la carte électronique soit fixée au boitier à l'aide de cordons de colle souple à base de silicone, l'invention s'applique également à d'autres types de liaison entre le boîtier et la carte électronique autorisant un mouvement relatif du boitier et de la carte électronique, comme par exemple un joint synthétique ou naturel de type caoutchouc ou EPDM.

Bien qu'ici les premiers canaux, les deuxièmes canaux et le troisième canal aient une section circulaire, l'invention s'applique également à des premiers canaux, des deuxièmes et/ou un troisième canal de section différente comme par exemple une section carrée ou autre.

Bien qu'ici le dispositif de mesure de pression comprenne un microcontrôleur, l'invention s'applique également à d'autres moyens de traitement du signal comme par exemple un FPGA, des portes logiques ou un microprocesseur.

L'invention s'applique à tous moyens de liaison des composants au circuit électronique comme par exemple par liaisons filaires, soudage/brasage, brochage ou frittage sur un support de type PCB.

Bien qu'ici le dispositif de mesure de pression comprenne un émetteur/récepteur radio (par exemple de type « RFID »), l'invention s'applique à tout type de techniques d'émission sans fil comme par exemple un protocole 2G, 3G, 4G, 5G, de type « LoRa », « edge », « Wi-Fi », « Bluetooth », ultrason ou « IOT ».

Bien qu'ici le dispositif de mesure de pression comprenne un convertisseur d'énergie électromagnétique, l'invention s'applique également à d'autres types de convertisseurs d'énergie comme par exemple un convertisseur d'énergie cinétique inductif ou de type piézoélectrique ou un convertisseur d'énergie thermique.

Bien qu'ici le dispositif de mesure soit placé dans une roue d'aéronef, l'invention s'applique également à d'autres véhicules comme par exemple des camions ou des automobiles.

Bien qu'ici le pneumatique soit rempli d'azote sous pression, l'invention s'applique également à des pneus remplis d'autres types de fluide sous pression comme par exemple l'air ou des gaz inertes autres que l'azote.

Bien qu'ici le capteur de pression soit de type piézoélectrique, l'invention s'applique également à d'autres types de capteurs de pression comme par exemple un capteur résistif, inductif, piézorésistif, capacitif ou résonnant.

Bien qu'ici les deuxièmes canaux soient pourvus d'un revêtement métallique obtenu par métallisation, l'invention s'applique également à d'autres moyens d'application d'un revêtement métallique sur les deuxièmes canaux, comme par exemple un sertissage d'une chemise métallique ou la pose d'une peinture conductrice.

Les deuxièmes canaux peuvent être dépourvus de revêtement métallique.

Bien qu'ici un anneau en cuivre reçu dans une rainure de la première surface de la carte électronique s'étende autour de chaque deuxième canal, l'invention s'applique également à d'autre type d'élément conducteur placé à proximité du deuxième canal comme par exemple un anneau de forme carrée ou quelconque, une métallisation de la surface de la première carte électronique ou une impression à l'aide d'une encre conductrice.

Bien qu'ici le dispositif de mesure de pression comprenne une batterie, l'invention s'applique également à d'autres types de générateur de tension comme par exemple une pile ou un condensateur.

Bien qu'ici l'élément conducteur soit relié à un pôle négatif du générateur de tension et le revêtement de chaque deuxième canal soit relié au pôle positif du générateur de tension, l'invention s'applique également à une inversion des polarités de connexion.

Bien qu'ici la carte électronique soit liée par des cordons de colle au boîtier, l'invention s'applique également à d'autres types de liaison entre le boitier et la carte électronique comme par exemple un ou plusieurs plots élastomères s'étendant depuis la première surface de la carte électronique jusqu'à la première partie du boîtier et un ou plusieurs plots élastomères s'étendant depuis la deuxième surface de la carte électronique jusqu'au la deuxième face du boîtier.

Bien qu'ici la première portion et la deuxième portion de la carte électronique s'étendant hors du boîtier soient des portions rigides qui portent une antenne, les première et deuxième portions peuvent également être flexible et/ou contenir d'autres types d'éléments conducteurs en relation avec les composants qui sont sous le boîtier.

Le dispositif de mesure de pression peut également comprendre un capteur de température pour transmettre la température et/ou réaliser une compensation en température de la mesure du capteur de pression. La mesure de la température peut être réalisée par un capteur dédié ou encore être mesurée sur un capteur piézorésistif par la mesure de la résistance d'entrée de l'élément sensible ou par toute autre combinaison de résistances d'un capteur piézorésistif dont le résultat ne fournirait qu'une image de la température, celle de la pression étant éliminée dans la combinaison réalisée (résistances travaillant en longitudinal ou transversal donnant respectivement des facteurs de jauge positif et négatifs).

Pour des raisons de redondances de la mesure, il est envisageable de placer plusieurs dispositifs de mesure de pression dans une même roue.

Bien qu'ici la forme des première et deuxième portion de la carte électronique soit de forme triangulaire, l'invention s'applique également à toute autre forme, comme par exemple des portions de forme rectangulaire.

Bien qu'ici le fond du boîtier prenne appui indirectement sur la surface interne de la bande de roulement du pneumatique via un élément de liaison, le fond peut aussi prendre appui directement sur ladite surface interne de la bande de roulement.

Le volume V1 peut être égal ou supérieur au volume V2 à condition que le centre de gravité G soit situé en dessous de la carte électronique 20. On pourrait par exemple envisager que le fond 13 de la deuxième partie 10.2 du boîtier 10 soit plus épais de manière à abaisser le centre de gravité G et que le volume V2 résultant soit sensiblement égal au volume V1.

Le diamètre des premiers canaux 12 peut être supérieur à celui des deuxièmes canaux 21 de manière à améliorer la filtration de l'air passant du premier volume V1 vers le deuxième volume V2 au détriment de sa circulation entre lesdits premier volume V1 et le deuxième volume V2.

Le diamètre du troisième canal 22 peut être supérieur à celui des deuxièmes canaux 21 de manière à ce qu'aucune des particules filtrées par les deuxième canaux 21 soit en mesure de boucher le troisième canal 22.

Le circuit électronique pourra comprendre d'autres composants électroniques en lieu et place et/ou en plus des composants électroniques 31, 32, 33, 34. Néanmoins, les composants dits « critiques », c'est-à-dire ceux susceptibles d'être endommagés par des particules contenues dans le volume interne V (poussière, limaille, grain de sable...), seront préférentiellement répartis sur la deuxième face 20.2 de la carte électronique 20, autrement dit dans le deuxième volume V2, de manière à bénéficier de la double filtration réalisée par les premiers canaux 12 et les deuxièmes canaux 21.

## Revendications

1. Dispositif (1, 100, 200, 300, 400, 500, 600) de mesure de pression destiné à équiper un pneumatique (P), comprenant :
- un circuit électronique qui est réparti sur une première face (20.1) et une deuxième face (20.2) d'une carte électronique (20) et qui comprend un capteur de pression (30) monté sur la première face de la carte électronique ;
- au moins une antenne (26.1, 26.2) reliée au circuit électronique ;
- une première partie (10.1) de boîtier (10) recouvrant au moins partiellement la première face pour délimiter avec celle-ci un premier volume (V1) et comportant au moins un premier canal (12) mettant en communication fluidique le premier volume avec l'extérieur ; et
- une deuxième partie (10.2) de boîtier (10) recouvrant au moins partiellement la deuxième face pour délimiter avec celle-ci un deuxième volume (V2) et possédant au moins un fond (13) pour prendre appui contre une surface interne du pneumatique, la deuxième partie de boîtier étant agencée de telle manière que l'antenne s'étende en saillie latérale au moins par rapport à ladite deuxième partie de boîtier et que le dispositif ait un centre de gravité situé dans le deuxième volume à distance de la carte électronique.

2. Dispositif (1, 100, 200, 300, 400, 500, 600) selon la revendication 1, dans lequel la première partie (10.1) de boîtier (10) présente une hauteur (H1) inférieure à celle (H2) de la deuxième partie (10.2) de boîtier (10).

3. Dispositif (1, 100, 200, 300, 400, 500, 600) selon l'une quelconque des revendications précédentes, dans lequel le premier volume (V1) est inférieur au deuxième volume (V2).

4. Dispositif (1, 100, 200, 300, 400, 500, 600) selon l'une quelconque des revendications précédentes, dans lequel la surface projetée de la première partie (10.1) de boîtier (10) sur la première face (20.1) de la carte électronique (20) selon un axe (Z) orthogonal à ladite première face est inscrite dans la surface projetée de la deuxième partie (10.2) de boîtier (10) sur la même première face et selon la même direction.

5. Dispositif (1, 100, 200, 300, 400, 500, 600) selon l'une quelconque des revendications précédentes, dans lequel l'antenne (26.1, 26.2) comprend un fil ou une piste (27.1, 27.2) s'étendant à l'intérieur de la carte électronique (20).

6. Dispositif (1, 100, 200, 300, 400, 500, 600) selon la revendication 5, dans lequel l'antenne (26.1, 26.2) est de forme sensiblement triangulaire.

7. Dispositif (1, 100, 200, 300, 400, 500, 600) selon l'une quelconque des revendications précédentes, dans lequel la deuxième partie (10.2) de boîtier (10) comprend une surface latérale externe (15) au moins en partie de forme convexe.

8. Dispositif (1, 100, 200, 300, 400, 500, 600) selon la revendication 7, dans lequel la paroi latérale de la deuxième partie de boîtier comprend une rainure (14) annulaire externe formant des moyens de fixation du dispositif au pneumatique (P).

9. Dispositif (1, 100, 200, 300, 400, 500, 600) selon l'une quelconque des revendications précédentes, dans lequel le boîtier (10) est de forme globalement cylindrique.

10. Pneumatique (P) comprenant un dispositif (1, 100, 200, 300, 400, 500, 600) de mesure de pression selon l'une quelconque des revendications précédentes.

11. Pneumatique (P) selon la revendication 10, dans lequel le fond (13) de la deuxième partie (10.2) de boîtier (10) prend appui contre une surface interne d'une bande de roulement du pneumatique (P).

12. Pneumatique (P) selon la revendication 11, comprenant un élément de liaison (40) collé à la surface interne de la bande de roulement du pneumatique, l'élément de liaison comportant un réceptacle (42) dans lequel est insérée la deuxième partie (10.2) de boîtier (10).

13. Roue (R) comprenant un pneumatique (P) selon l'une quelconque des revendications 10 à 12.

14. Train d'atterrissage d'aéronef comprenant au moins une roue (R) selon la revendication 13.

## Patentansprüche

1. Druckmessvorrichtung (1, 100, 200, 300, 400, 500, 600), welche zur Ausstattung eines Reifens (P) dient, umfassend:
- eine elektronische Schaltung, die auf eine erste Seite (20.1) und auf eine zweite Seite (20.2) einer elektronischen Karte (20) verteilt ist und einen auf der ersten Seite der elektronischen Karte montierten Drucksensor (30) umfasst;
- zumindest eine mit der elektronischen Schaltung verbundene Antenne (26.1, 26.2);
- ein erstes Gehäuseteil (10.1) des Gehäuses (10), das zumindest teilweise die erste Seite bedeckt, um gemeinsam mit dieser ein erstes Volumen (V1) zu begrenzen, und das zumindest einen ersten Kanal (12) enthält, der das erste Volumen mit der Außenumgebung in Fluidverbindung bringt; und
- ein zweites Gehäuseteil (10.2) des Gehäuses (10), das zumindest teilweise die zweite Seite bedeckt, um gemeinsam mit dieser ein zweites Volumen (V2) zu begrenzen, und das zumindest einen Boden (13) zur Anlage gegen eine Innenfläche des Reifens aufweist, wobei das zweite Gehäuseteil derart ausgelegt ist, dass sich die Antenne seitlich hervorstehend zumindest von dem zweiten Gehäuseteil weg erstreckt und dass die Vorrichtung einen in dem zweiten Volumen gelegenen und von der elektronischen Karte beabstandeten Schwertpunkt besitzt.

2. Vorrichtung (1, 100, 200, 300, 400, 500, 600) nach Anspruch 1, wobei das erste Gehäuseteil (10.1) des Gehäuses (10) eine Höhe (H1) aufweist, die geringer ist als diejenige (H2) des zweiten Gehäuseteils (10.2) des Gehäuses (10).

3. Vorrichtung (1, 100, 200, 300, 400, 500, 600) nach einem der vorhergehenden Ansprüche, wobei das erste Volumen (V1) kleiner ist als das zweite Volumen (V2).

4. Vorrichtung (1, 100, 200, 300, 400, 500, 600) nach einem der vorhergehenden Ansprüche, wobei die projizierte Fläche des ersten Gehäuseteils (10.1) des Gehäuses (10), welche gemäß einer orthogonal zu der ersten Seite (20.1) der elektronischen Karte (20) verlaufenden Achse (Z) auf besagte erste Seite der elektronischen Karte projiziert ist, in die projizierte Fläche des zweiten Gehäuseteils (10.2) des Gehäuses (10), welche gemäß derselben Richtung auf dieselbe erste Seite projiziert ist, eingeschrieben ist.

5. Vorrichtung (1, 100, 200, 300, 400, 500, 600) nach einem der vorhergehenden Ansprüche, wobei die Antenne (26.1, 26.2) einen Draht bzw. eine Bahn (27.1, 27.2) umfasst, der/die sich innerhalb der elektronischen Karte (20) erstreckt.

6. Vorrichtung (1, 100, 200, 300, 400, 500, 600) nach Anspruch 5, wobei die Antenne (26.1, 26.2) im Wesentlichen dreieckförmig ausgebildet ist.

7. Vorrichtung (1, 100, 200, 300, 400, 500, 600) nach einem der vorhergehenden Ansprüche, wobei das zweite Gehäuseteil (10.2) des Gehäuses (10) eine äußere Seitenfläche (15) umfasst, die zumindest teilweise konvex ausgebildet ist.

8. Vorrichtung (1, 100, 200, 300, 400, 500, 600) nach Anspruch 7, wobei die Seitenwand des zweiten Gehäuseteils eine äußere Ringnut (14) umfasst, die als Befestigungsmittel zur Befestigung der Vorrichtung an dem Reifen (P) dient.

9. Vorrichtung (1, 100, 200, 300, 400, 500, 600) nach einem der vorhergehenden Ansprüche, wobei das Gehäuse (10) im Allgemeinen zylindrisch ausgebildet ist.

10. Reifen (P), umfassend eine Druckmessvorrichtung (1, 100, 200, 300, 400, 500, 600) nach einem der vorhergehenden Ansprüche.

11. Reifen (P) nach Anspruch 10, wobei der Boden (13) des zweiten Gehäuseteils (10.2) des Gehäuses (10) gegen eine Innenfläche einer Lauffläche des Reifens (P) anliegt.

12. Reifen (P) nach Anspruch 11, umfassend ein Verbindungselement (40), das an der Innenfläche der Reifenlaufläche angeklebt ist, wobei das Verbindungselement einen Aufnahmeraum (42) enthält, in welchen das zweite Gehäuseteil (10.2) des Gehäuses (10) eingesetzt ist.

13. Rad (R), umfassend einen Reifen (P) nach einem der Ansprüche 10 bis 12.

14. Luftfahrzeug-Fahrwerk, umfassend zumindest ein Rad (R) nach Anspruch 13.

## Claims

1. A pressure measuring device (1, 100, 200, 300, 400, 500, 600) for a tyre (P), comprising:
an electronic circuit that is distributed on a first face (20.1) and a second face (20.2) of an electronic board (20) and that includes a pressure sensor (30) mounted on the first face of the electronic board;
at least one antenna (26.1, 26.2) connected to the electronic circuit;
a first part (10.1) of housing (10) at least partially covering the first face such that together they delimit a first volume (V1) and comprising at least one first channel (12) fluidically connecting the first volume to the outside; and
a second part (10.2) of the housing (10) at least partially covering the second face such that together they delimit a second volume (V2) and having at least one bottom (13) for rest against an inner surface of the tyre, the second housing part being arranged in such a manner that the antenna projects laterally at least with respect to said second housing part and that the device has a centre of gravity located in the second volume spaced apart from the electronic board.

2. The device (1, 100, 200, 300, 400, 500, 600) according to claim 1, wherein the first part (10.1) of the housing (10) has a height (H1) smaller than that (H2) of the second part (10.2) of the housing (10).

3. The device (1, 100, 200, 300, 400, 500, 600) according to any one of the preceding claims, wherein the first volume (V1) is less than the second volume (V2).

4. The device (1, 100, 200, 300, 400, 500, 600) according to any one of the preceding claims, wherein the projected surface of the first part (10.1) of the housing (10) on the first face (20.1) of the electronic board (20) along an axis (Z) orthogonal to said first face is inscribed in the projected surface of the second part (10.2) of the housing (10) on the same first face and along the same direction.

5. The device (1, 100, 200, 300, 400, 500, 600) according to any one of the preceding claims, wherein the antenna (26.1, 26.2) comprises a wire or track (27.1, 27.2) extending within the electronic board (20).

6. The device (1, 100, 200, 300, 400, 500, 600) according to claim 5, wherein the antenna (26.1, 26.2) is substantially triangular in shape.

7. The device (1, 100, 200, 300, 400, 500, 600) according to any one of the preceding claims, wherein the second part (10.2) of the housing (10) includes an at least partially convex outer side surface (15).

8. The device (1, 100, 200, 300, 400, 500, 600) according to claim 7, wherein the side wall of the second housing part comprises an outer annular groove (14) forming means for fixing the device to the tyre (P).

9. The device (1, 100, 200, 300, 400, 500, 600) according to any one of the preceding claims, wherein the housing (10) is mainly cylindrical in shape.

10. A tyre (52) including a pressure measuring device (1, 100, 200, 300, 400, 500, 600) according to any one of the preceding claims.

11. The tyre (P) according to claim 10, wherein the bottom (13) of the second part (10.2) of the housing (10) rest against an inner surface of a tread of the tyre (P).

12. The tyre (P) according to claim 11, comprising a connection element (40) adhered to the inner surface of the tread of the tyre, the connection element including a receptacle (42) in which the second part (10.2) of the housing (10) is inserted.

13. A wheel (R) comprising a tyre (P) according to any one of the claims 10 to 12.

14. An aircraft landing gear comprising at least one wheel (R) according to claim 13.
